Europäisches Patentamt

European Patent Office

Office européen des brevets

(11) Publication number: **0 249 283**
**A2**

# EUROPEAN PATENT APPLICATION

(21) Application number: **87201043.4**

(51) Int. Cl.⁴: **G05D 23/19**

(22) Date of filing: **03.06.87**

(30) Priority: **11.06.86 ES 555934**

(43) Date of publication of application:
**16.12.87 Bulletin 87/51**

(84) Designated Contracting States:
**AT BE CH DE ES FR GB GR IT LI LU NL SE**

(71) Applicant: **Avellanet Branchadell, Juana**
**Pintor Fortuny No. 38**
**Sant Boi de Llobregat Barcelona(ES)**

(72) Inventor: **Avellanet Branchadell, Juana**
**Pintor Fortuny No. 38**
**Sant Boi de Llobregat Barcelona(ES)**

(74) Representative: **Modrie, Guy et al**
**Bureau Gevers SA 7, rue de Livourne Bte 1**
**B-1050 Bruxelles(BE)**

(54) **Electronic power and control arrangement.**

(57) Electronic power and control arrangement, comprising a control circuit (1) which gives the working order to this assembly and is connected to a control panel (2) which in turn is connected to a display (3) which presents digital data corresponding to a temperature selected by said control panel which, when operated, sends an instruction to the control circuit (1) which in turn sends this instruction to the power circuit (4), so that at this moment the apparatus works, a temperature detector (5) being provided, which is connected to the control circuit (1) which, when the selected temperature has been reached, compares it with the instruction received from the circuit of the control panel (2) and sends an order to the power circuit (4), determining the stop of the heating system, this procedure repeating itself cyclically as the temperature selected with the control panel varies or as a function of a decrease of the selected temperature.

## "Electronic power and control arrangement"

This invention relates to an electronic power and control arrangement for various electrical apparatus, namely apparatus of a very wide field ; one may cite, as an example only, the deep fryers for which the involved arrangement has been optimized.

The electronic arrangement in question presents numerous advantages of various orders. So, for example, it may be said that with this arrangement, a very important space saving is obtained, which facilitates storage and transport, it results a better reliability with a more quick work, a power increase is obtained and it is manifest that an easier technical assistance is possible thanks to the mobility of use of a least one printed circuit board. In a few words, it may be asserted that the electronic arrangement according to the invention constitutes a new system of universal application.

To facilitate a more detailed explanation and understanding thereof, a sheet of drawing is enclosed, on which it has been shown by only one figure, a practical embodiment of the electronic arrangement according to the invention, such as applied to a deep fryer which is cited by way of a non limitative example of the scope of the invention.

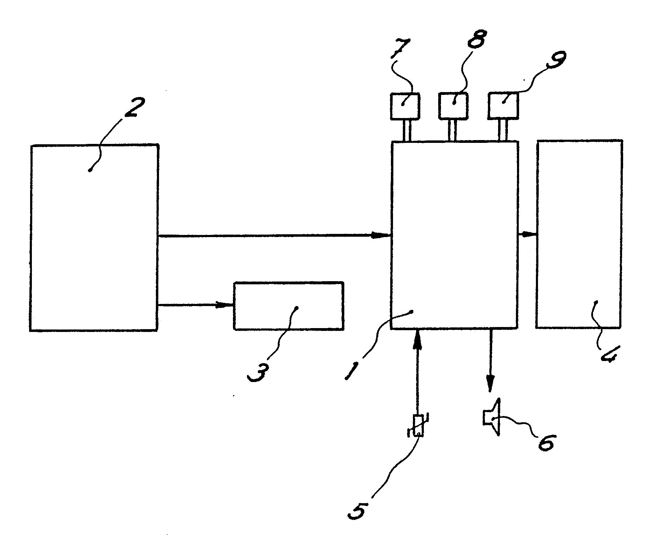

According to this sole figure, which represents the whole arrangement as a block diagram, this arrangement in the described example is based on the provision of a new assembly formed of at least one printed circuit board. This arrangement comprises a control circuit 1 which gives the working order to the assembly and to which is connected a control panel 2 which in turn is connected to a display 3 which presents digital data corresponding to the temperature selected by said control panel 2 according to the kind of work made by the apparatus, the temperature in the case of the apparatus to which the arrangement is applied being for example a deep fryer. After pushing on the keyboard of the control panel 2, the latter sends an instruction to the control circuit 1 which in turn sends this instruction to the power circuit 4. A this moment, the apparatus is working.

A temperature selector 5 has been provided, which is connected to the control circuit 1 which, when the selected temperature has been reached, compares it with the instructions received from the circuit of the control panel 2 and sends an order to the power circuit 4, determining the stop of the heating system. This procedure repeats itself cyclically and as the temperature selected with the control panel 2 varies or as a function of a decrease of the selected temperature.

The assembly comprises an alarm device 6 connected to the control circuit 1 and operating when a regulated safety temperature is reached, the apparatus when stopping. The alarm device, in case of the temperature detector 5 being damaged, detects the error and stops the apparatus.

The arrangement comprises a switch 7, a temperature pilot device 8 and an alarm pilot device 9, all said components being connected to the control circuit 1.

It has to be understood that the construction details of this arrangement are subject to variants which do not modify the essence of the invention.

## Claims

Electronic power and control arrangement for various electrical apparatus, characterized in that it comprises an assembly formed of at least one printed circuit board, this assembly comprising a control circuit (1) which gives the working order to this assembly and is connected to a control panel (2) which in turn is connected to a display (3) which presents digital data corresponding to a temperature selected by said control panel which, when operated, sends an instruction to the control circuit (1) which in turn sends this instruction to the power circuit (4), so that at this moment the apparatus works, a temperature detector (5) being provided, which is connected to the control circuit (1) which, when the selected temperature has been reached, compares it with the instruction received from the circuit of the control panel (2) and sends an order to the power circuit (4), determining the stop of the heating system, this procedure repeating itself cyclically as the temperature selected with the control panel varies or as a function of a decrease of the selected temperature, the assembly comprising an alarm device (6) which, being connected to the control circuit (1), operates when a regulated safety temperature has been reached and stops the apparatus and which, in the case of the temperature detector being damaged, detects the error and also stops the apparatus, the arrangement also comprising a switch (7), a temperature pilot device (8) and an alarm pilot device (9), all three of them being connected to the control circuit (1).